# DEMANDE DE BREVET EUROPEEN

(11) **EP 3 628 541 A1**
(43) Date de publication de la demande: **01.04.2020**
(21) Numéro de dépôt: 19199854.1
(22) Date de dépôt: 26.09.2019
(51) Int. Cl.: B60R 13/00, B29C 45/00, B60Q 1/00, F21V 8/00

(54) **PIÈCE DE CARROSSERIE KALÉIDOSCOPE**

(30) Priorité: 26.09.2018 FR 1858830
(71) Demandeur: Compagnie Plastic Omnium, 69007 Lyon (FR)
(72) Inventeur: DUBOST, Elise, 01150 Sainte-Julie (FR); STABLO, Frédéric, 38390 Porcieu Amblagnieu (FR); GUILLIER, Stéphane, 01800 Charnoz sur Ain (FR)
(74) Mandataire: LLR

(57) **Abrégé**

Pièce de carrosserie (10) pour véhicule automobile, caractérisée en ce qu'elle comprend :
- un élément transparent ou translucide (20) comprenant une première surface (22) destinée à être tournée vers l'extérieur du véhicule, et une seconde surface (24) opposée à la première surface (22), ladite seconde surface (24) comprenant au moins une zone en relief (26) ;
- un élément opaque (30) recouvrant au moins en partie la seconde surface (24) de l'élément transparent ou translucide (20).

## Description

L'invention concerne les pièces de carrosserie pour véhicule automobile. Notamment les pièces comportant des éléments ayant une apparence en trois dimensions.

De nombreux éléments en relief formant saillie de pièces de carrosserie sont souvent présents sur celles-ci, tels des logos du constructeur ou des inscriptions.

Ces éléments présentent l'inconvénient d'être exposés aux dégradations dues à des éléments externes au véhicule. Une mise en vernis peut s'avérer nécessaire afin de protéger ces éléments de ces dégradations.

Ils sont également difficiles à nettoyer, car des salissures ont tendance à venir se coincer dans les reliefs.

Enfin, des éléments en relief trop saillants sont interdits pour des raisons de sécurité, risquant de blesser des piétons en cas de choc.

Ces éléments en relief forment une partie indispensable de l'esthétique générale du véhicule.

Pour pallier à ces inconvénients, il existe des feuilles adhésives que l'on colle sur les pièces de carrosserie pour donner un effet de relief à certaines parties de la pièce de carrosserie afin d'améliorer son aspect esthétique général. Ces feuilles adhésives peuvent présenter des motifs avec différentes couleurs.

Ces feuilles adhésives présentent l'inconvénient d'être très fragiles et difficiles à poser correctement, sans bulle, pli et sur le bon emplacement. Les motifs en relief ne sont pas protégés du milieu extérieur. Par exemple, lors d'un nettoyage, notamment en utilisant un jet d'eau à haute pression, cet adhésif peut se décoller de la pièce de carrosserie.

De même, la maintenance d'une telle pièce adhésive rapportée sur la pièce de carrosserie est très compliquée, car il faut décoller l'adhésif, qui peut abimer la surface sur laquelle il était déposé, et ensuite préparer cette surface pour la pose d'un nouvel adhésif. Ceci est d'autant plus problématique que les feuilles adhésives vieillissent, par exemple en changeant de couleur, ou en se déformant et ne peuvent généralement pas durer toute la durée de vie du véhicule sans être changées.

L'invention a pour but de proposer une pièce de carrosserie ayant un aspect en relief et surmontant les inconvénients précités.

L'invention a donc pour objet une pièce de carrosserie pour véhicule automobile, qui comprend un élément transparent ou translucide comprenant une première surface destinée à être tournée vers l'extérieur du véhicule, et une seconde surface opposée à la première surface, ladite seconde surface comprenant au moins une zone en relief. Elle comprend également un élément opaque recouvrant au moins en partie la seconde surface de l'élément transparent ou translucide.

De cette manière, la zone en relief ne forme pas la surface externe de la pièce de carrosserie. Le relief visible de l'extérieur est formé à la fois par la deuxième surface de l'élément transparent et par l'élément opaque la recouvrant.

Ainsi, la pièce de carrosserie présente des reliefs qui sont protégés du milieu extérieur. Ils sont ainsi plus solides, ce qui permet à la pièce de carrosserie de garder un aspect extérieur convenable plus longtemps.

De plus, la pièce est bien plus facile à nettoyer qu'une pièce avec un relief sur l'extérieur. En effet, des saletés peuvent se nicher dans les recoins de reliefs externes d'une pièce avec un relief sur l'extérieur, ce qui rend le nettoyage très difficile. Dans la pièce de carrosserie selon l'invention, le relief n'étant pas situé sur la surface externe, il ne se salit pas. C'est la surface externe de l'élément de transparence, qui peut avoir toute une variété de forme et d'états de surface, qui est exposé aux salissures.

Enfin, les reliefs n'étant pas situés sur l'extérieur de la pièce, ceux-ci ne forment pas d'éléments saillants qui seraient gênant en termes de sécurité lors d'un contact avec un piéton.

La pièce de carrosserie peut en outre comporter l'une ou plusieurs des caractéristiques suivantes, prises seules ou en combinaison :
- l'élément opaque est surmoulé sur l'élément transparent ou translucide ;
- la première surface de l'élément transparent ou translucide est en partie recouverte d'une couche de peinture ;
- la couche de peinture recouvrant la première surface a été partiellement grattée par laser ;
- la première surface comporte des zones qui ont été marouflées avant dépose de peinture ;
- la première surface de l'élément transparent ou translucide comporte des zones texturées, de préférence texturées et opacifiées ;
- une couche de protection recouvre la première surface de l'élément transparent ou translucide ;
- la couche de protection est choisie parmi : un film (par exemple en PU), une couche déposée par pulvérisation (par exemple un vernis), ou une couche injectée (par exemple du type PU) ;
- la pièce de carrosserie comporte une source lumineuse disposée de façon à pouvoir éclairer directement l'élément transparent ou translucide ;
- l'élément transparent ou translucide comporte une troisième surface reliant ses première et deuxième surface, la source lumineuse éclairant l'élément transparent ou translucide depuis la troisième surface ;

L'invention concerne également un procédé de fabrication d'une pièce de carrosserie de véhicule automobile selon l'invention qui comprend les étapes de :
- moulage par injection de l'élément transparent ou translucide ;
- surmoulage de l'élément opaque sur la deuxième surface de l'élément transparent ou translucide ;
- pose d'une couche de protection sur la première surface de l'élément transparent ou translucide.

Le procédé de fabrication selon l'invention peut en outre comporter l'une ou plusieurs des caractéristiques suivantes, prises seules ou en combinaison :
- le procédé comprend en outre une étape de pose d'une couche de peinture sur la première surface de l'élément transparent ou translucide, de manière préliminaire à l'étape de pose de la couche de protection.
- le procédé comprend une étape de grattage laser d'au moins une partie de la couche de peinture recouvrant la première surface de manière préliminaire à l'étape de pose de la couche de protection ;
- le procédé comprend une étape de marouflage de la première surface, de manière préliminaire à l'étape de pose de la couche de protection.

Dans ce qui suit, les termes tels que « axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles selon les repères représentés sur les figures

Nous allons maintenant présenter un mode de réalisation de l'invention donné à titre d'exemple non limitatif et à l'appui des figures annexées sur lesquelles :
- la figure 1 est une vue en coupe d'une pièce de carrosserie selon un premier mode de réalisation de l'invention ;
- la figure 2 est une vue en coupe d'une pièce de carrosserie selon un second mode de réalisation de l'invention.

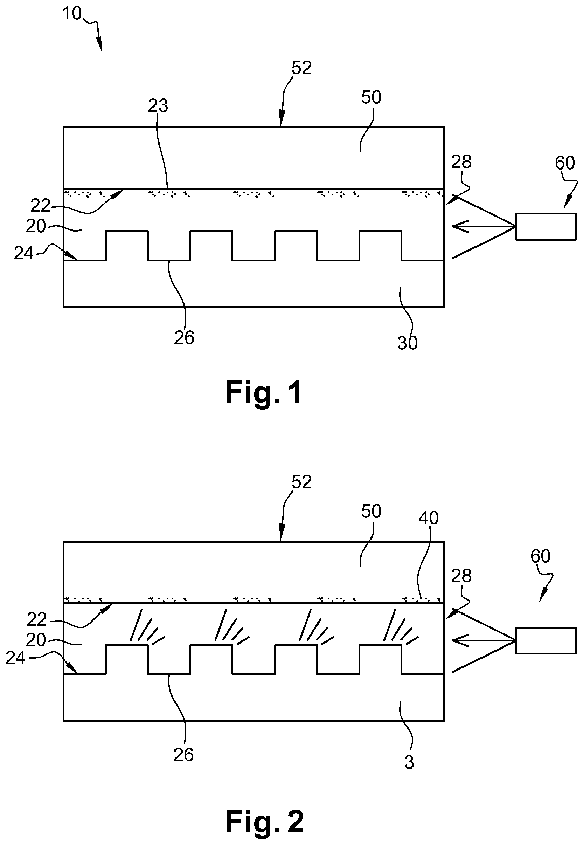

On se réfère maintenant à la figure 1 qui est une section partielle d'une pièce de carrosserie selon l'invention, selon un plan normal à l'axe transversal Y du véhicule lorsque la pièce est montée sur un véhicule automobile.

Cette pièce de carrosserie comprend un élément transparent ou translucide 20. Cet élément 20 est ici composé de matière plastique. Cet élément est de manière générale composée de matière thermoplastique, de préférence du polycarbonate, du polyméthacrylate de méthyle, ou encore du polypropylène, ou bien à base de polyoléfine amorphe telle que les cyclo-oléfines-copolymères (COC) et cyclo-oléfines-polymères (COP). Cette matière plastique est transparente ou translucide. Par transparente on entend une matière transmettant la lumière par réfraction et au travers de laquelle des objets sont visibles avec netteté. Par translucide, on entend une matière transmettant la lumière de manière diffuse et au travers de laquelle des objets apparaissent flous.

Cet élément 20 comprend une première surface 22 qui est destinée à être tournée vers l'extérieur du véhicule, lorsque la pièce de carrosserie 10 est montée sur un véhicule. Cette première surface 22 est ici plane, mais peut tout à fait, de manière alternative, être légèrement incurvée ou de tout autre forme.

L'élément transparent ou translucide 20 comprend une deuxième surface 24, qui est opposée à la première surface 22. Cette deuxième surface 24 comprend ici plusieurs zones en relief 26. Par zone en relief, on entend une zone qui fait saillie d'une surface. Ici, les zones en relief 26 font saillie de la deuxième surface 24. Ici, les reliefs sur l'élément transparent ou translucide 20 présentent un profil en forme de créneau, mais peuvent toutefois prendre toute sorte de formes, comme nous le verrons plus tard.

Un élément opaque 30 recouvre au moins en partie la seconde surface 24 de l'élément transparent ou translucide 20. Par opaque on entend que l'élément opaque 30 ne laisse que peu ou pas du tout une lumière le traverser. De manière préférentielle, l'élément opaque recouvre toute la seconde surface 24 de l'élément transparent ou translucide 20. Dans ce cas, il recouvre toute la seconde surface 24 ainsi que les zones en relief 26. Cet élément opaque 30 est d'une couleur qui peut être toute sorte de couleur qui aura été choisie par l'homme du métier.

Avantageusement, l'élément opaque 30 est en matière plastique et est surmoulé sur l'élément transparent ou translucide 20.

La première surface 22 est dans ce mode de réalisation sensiblement lisse, mais comporte des zones texturées 23 qui ne laissent pas passer la lumière comme le peuvent les zones qui ne sont pas texturées de la première surface 22. Dans ce mode de réalisation, ces zones 23 sont texturées et opacifiées, c'est-à-dire qu'elles ne laissent pas ou peu passer la lumière. Ainsi, la combinaison des reliefs 26 de la seconde surface 24 et des zones texturées de la première surface 22 confère un effet en trois dimensions à la pièce de carrosserie 10, pour un utilisateur l'observant depuis l'extérieur.

Les zones texturées 33 peuvent représenter toute forme de motifs, tels un damier par exemple, ou des dessins de toutes sortes, tels un logo de constructeur par exemple.

Avantageusement, la première surface 22 est recouverte d'une couche de protection 50. Cette couche de protection peut être un film (par exemple en PU), une couche déposée par pulvérisation (par exemple un vernis), ou encore, une couche injectée (par exemple du type PU).

Selon un exemple, la couche 50 est un vernis. Ainsi, cette couche de vernis 50 agit comme couche de protection de la première surface 22. Elle permet également d'avoir une surface extérieure du vernis 52 qui est lisse et est donc facile à nettoyer de toutes les saletés qui se seraient déposées dessus, comme des insectes écrasés, de la boue, ou de la poussière par exemple.

La pièce de carrosserie 10 comprend également une source lumineuse 60. Celle -ci est disposée de façon à émettre de la lumière dans l'élément transparent ou translucide 20. De cette façon, les reliefs 26 et l'élément opaque 30 en contact avec ceux-ci sont directement éclairés par la source lumineuse 60. Ainsi, par réflexion, une partie de la lumière reçue est renvoyée en direction de la première surface 22 de l'élément transparent ou translucide 20, et est donc visible pour une personne regardant en direction de la première surface 22 de la pièce de carrosserie 20. De plus, en combinaison avec les zones texturées 23 de la première surface 22, cela confère un effet lumineux de type « kaléidoscope » à la pièce de carrosserie 10.

De manière avantageuse, l'élément transparent ou translucide 20 comprend une troisième surface 28 reliant les premières et seconde surfaces 22, 24. La source lumineuse 60 éclaire l'élément transparent ou translucide 20 depuis cette troisième surface 28. En d'autres termes, la lumière issue de la source lumineuse 60 pénètre dans l'élément transparent ou translucide 20 par cette troisième surface 28. Cette disposition de la source lumineuse 60 lui permet d'éclairer les reliefs 26 depuis l'intérieur de l'élément transparent ou translucide 20. Ainsi, cela renforce l'effet de relief perçu lorsque l'on observe la pièce de carrosserie 10.

Nous allons maintenant décrire un procédé de fabrication de la pièce de carrosserie 10 décrite précédemment.

On moule d'abord par injection l'élément transparent ou translucide 20. Ensuite, on surmoule l'élément opaque 30 sur la deuxième surface 26 de l'élément transparent ou translucide 20. Ce surmoulage permet à l'élément opaque de bien englober la seconde surface 24 et ses reliefs 26. Ainsi, ceux-ci sont bien visibles, car recouverts d'une matière opaque. On pose également une couche de protection 50 sur la première surface 22 de l'élément transparent ou translucide 20. Cette couche de protection 50 sert de couche de finition et de protection pour la pièce de carrosserie 10.

Avantageusement, la première surface 22 de l'élément transparent ou translucide 20 est grattée par laser. Cette étape a lieu avant la pose de la couche de protection 50. Le grattage laser permet de réaliser les zones texturées 23 de la première surface 22. Ce mode opératoire présente l'avantage d'offrir une grande précision dans la forme de ces zones 23. De plus, le grattage laser offre une grande reproductibilité et une forte cadence de production. Enfin, il permet de facilement personnaliser ces zones grâce à la facilité de programmation d'une machine laser.

Nous allons maintenant, en nous appuyant sur la figure 2, présenter un deuxième mode de réalisation de l'invention.

Dans ce qui suit, nous allons uniquement décrire les éléments qui diffèrent de ceux du premier mode de réalisation présenté. Les autres éléments sont inchangés et ne seront pas à nouveau décrits.

La pièce de carrosserie 10 présenté en figure 2 comprend un élément transparent ou translucide 20 et un élément opaque 30. La seconde surface 22 de l'élément transparent ou translucide 20 ne comprend pas ici de zones texturées comme précédemment.

Une couche de peinture 40 recouvre en partie la première surface 22 de l'élément transparent ou translucide 20. Ainsi, certaines zones de cette première surface 22 sont recouvertes de peinture, qui est de préférence opaque alors que certaines zones de cette même surface 22 ne sont, elles, pas recouvertes de peinture. Pour obtenir une zone non recouverte de peinture, deux techniques sont possibles :
- grattage de la couche de peinture 40 ;
- marouflage de la surface 22 avant le dépôt de la peinture 40.

Ainsi, la couche de peinture 40 créé des motifs qui, en combinaison avec les reliefs 26 de la seconde surface 24, renforcent l'effet visuel apporté à la pièce de carrosserie 10.

Avantageusement, la couche de peinture a été grattée par laser pour créer les zones qui ne sont pas recouvertes de peinture. De cette façon, on obtient une grande précision dans la définition des zones avec et sans peinture.

La fabrication de la pièce de carrosserie 10 selon le mode de réalisation présenté en figure 2 se déroule de manière similaire à la fabrication de celle du mode de réalisation présenté en figure 1. La différence se situe dans une étape de pose de la couche de peinture 40 sur la première surface 22 de l'élément transparent ou translucide 20.

Cette couche de peinture 40 est déposée, par exemple par pulvérisation, afin de recouvrir toute la seconde surface 24.

Ensuite, la couche de peinture 40 est grattée par laser, selon une alternative, ce qui permet d'obtenir une seconde surface recouverte en partie par la peinture, avec des zones recouvertes et des zones non recouvertes. Cette étape a lieu avant la pose de la couche de protection 50. Le grattage laser permet de réaliser les zones non recouvertes de peinture de la première surface 22. Ce mode opératoire présente l'avantage d'offrir une grande précision dans la forme de ces zones. De plus, le grattage laser offre une grande reproductibilité et une forte cadence de production. Enfin, il permet de facilement personnaliser ces zones grâce à la facilité de programmation d'une machine laser. Cette étape est réalisée avant la pose de la couche de protection 50.

Alternativement au grattage, une zone de la surface 22 peut être marouflée avant l' étape de pose de la peinture 40. La zone marouflée évite ainsi que la peinture 40 ne se dépose sur la surface 22. Après la pose de la peinture 40, la zone est démarouflée, présentant alors une zone non peinte. Préférentiellement, le démarouflage a lieu avant la pose de la couche de protection.

L'invention n'est pas limitée aux modes de réalisation présentés et d'autres modes de réalisation apparaîtront clairement à l'homme du métier.

### Nomenclature :

10 : pièce de carrosserie pour véhicule automobile
20 : élément transparent ou translucide
22 : première surface de l'élément transparent ou translucide
23 : zones texturées de la première surface
24 : deuxième surface de l'élément transparent ou translucide
26 : zone en relief
28 : troisième surface de l'élément transparent ou translucide
30 : élément opaque
40 : peinture
50 : couche de protection (vernis par exemple)
52 : surface extérieure de la couche de protection
60 : source lumineuse

## Revendications

1. Pièce de carrosserie (10) pour véhicule automobile, **caractérisée en ce qu'**elle comprend :
- un élément transparent ou translucide (20) comprenant une première surface (22) destinée à être tournée vers l'extérieur du véhicule, et une seconde surface (24) opposée à la première surface (22), ladite seconde surface (24) comprenant au moins une zone en relief (26) ;
- un élément opaque (30) recouvrant au moins en partie la seconde surface (24) de l'élément transparent ou translucide (20).

2. Pièce de carrosserie (10) selon la revendication précédente dans laquelle l'élément opaque (30) est surmoulé sur l'élément transparent ou translucide (20).

3. Pièce de carrosserie selon l'une des revendications précédentes dans laquelle la première surface (22) de l'élément transparent ou translucide (20) est en partie recouverte d'une couche de peinture (40).

4. Pièce de carrosserie (10) selon la revendication précédente dans laquelle la couche de peinture (40) recouvrant la première surface (22) a été partiellement grattée par laser.

5. Pièce de carrosserie (10) selon la revendication 3 dans laquelle la première surface (22) comporte des zones qui ont été marouflées avant dépose de peinture (40).

6. Pièce de carrosserie (10) selon l'une des revendications précédentes dans laquelle la première surface (22) de l'élément transparent ou translucide (20) comporte des zones texturées (23), de préférence texturées et opacifiées.

7. Pièce de carrosserie (10) selon l'une des revendications précédentes dans laquelle une couche de protection (50) recouvre la première surface (22) de l'élément transparent ou translucide (20).

8. Pièce de carrosserie (10) selon la revendication précédente dans laquelle la couche de protection (50) est choisie parmi : un film, une couche déposée par pulvérisation ou une couche injectée.

9. Pièce de carrosserie (10) selon l'une des revendications précédentes qui comporte une source lumineuse (60) disposée de façon à pouvoir éclairer directement l'élément transparent ou translucide (20).

10. Pièce de carrosserie (10) selon l'une des revendications précédentes dans laquelle l'élément transparent ou translucide (20) comporte une troisième surface (28) reliant ses première (22) et deuxième (24) surface, la source lumineuse (50) éclairant l'élément transparent ou translucide (20) depuis la troisième surface (28).

11. Procédé de fabrication d'une pièce de carrosserie de véhicule automobile (10) selon l'une des revendications précédentes **caractérisé en ce qu'**il comprend les étapes de :
- moulage par injection de l'élément transparent ou translucide (20) ;
- surmoulage de l'élément opaque (30) sur la deuxième surface (24) de l'élément transparent ou translucide (20) ;
- pose d'une couche de protection (50) sur la première surface (22) de l'élément transparent ou translucide (20).

12. Procédé de fabrication selon la revendication 11 qui comprend en outre une étape de pose d'une couche de peinture (40) sur la première surface (22) de l'élément transparent ou translucide (20), de manière préliminaire à l'étape de pose de la couche de protection (50).

13. Procédé de fabrication selon la revendication 12 qui comprend une étape de grattage laser d'au moins une partie de la couche de peinture (40) recouvrant la première surface (22) de manière préliminaire à l'étape de pose de la couche de protection (50).

14. Procédé de fabrication selon la revendication 12 qui comprend une étape de marouflage de la première surface (22), de manière préliminaire à l'étape de pose de la couche de protection (50).
